# EUROPEAN PATENT APPLICATION

(11) **EP 1 720 305 A1**
(43) Date of publication of application: **08.11.2006**
(21) Application number: 06380094.0
(22) Date of filing: 26.04.2006
(51) Int. Cl.: H04L 12/58

(54) **Method for allowing a mobile subscriber to send multimedia content from a computer to another mobile telephony subscriber**

(30) Priority: 06.05.2005 ES 200501091
(71) Applicant: Vodafone Group PLC, Newbury Berkshire RG14 2FN (GB); Vodafone Espana, S.A., 28108 Alcobendas, Madrid (ES)
(72) Inventor: Der Ser Bartolome, David, 28005 Madrid (ES); Ochoa Gimenez, Susana, 20037 Madrid (ES); Serrano Jorge, Pedro, 28528 Rivas-Vaciamadrid (ES)
(74) Representative: Carvajal y Urquijo, Isabel

(57) **Abstract**

A method for a source subscriber (10) to send multimedia content (50) from a computer (11) to a mobile telephony recipient subscriber (20) comprising the following steps:
- running a plug-in application (100) embedded in an application that can be run on said computer (11),
- said source subscriber providing authentication information related to his or her identity (MSISDN 10) as a subscriber of a mobile network (40),
- providing information relating to an identity (MSISDN 20) of the recipient subscriber (20),
- composing a multimedia message containing at least said multimedia content (50),
- sending said multimedia message to a Messaging Service (30) through a communications network (25) to which said source subscriber is connected through the computer and by means of said embedded plug-in application.

## Description

### Field of the Invention

The present invention is encompassed within the field of mobile telecommunications, and more specifically in sending multimedia messages MMS to mobile terminals.

### Background of the Invention

Currently most MMS messages are directly composed in the subscriber's terminal, using multimedia content (images, sound, etc...) located in the mobile terminal. There are also methods for sending MMS messages from a PC, accessing the operator's web site, for example. From there, the multimedia content located on the subscriber's hard drive can be used or the multimedia library offered by the operator can be accessed. That is, when an Internet subscriber wants to sent multimedia content (image, melody, video, etc...) that he or she finds when browsing on the Internet, for example from a PC, to a mobile subscriber, he or she must then perform the following steps:
1. Selecting the target multimedia content and storing it on the hard drive of the PC from which he or she is browsing.
2. Connecting the PC to his or her mobile terminal via infrared, Bluetooth, cable...
3. Sending the multimedia content to the mobile terminal.
4. Creating and sending an MMS in the mobile terminal, including the multimedia content.
   Or the following alternative is possible:
   2'. Opening an application in the PC which allows sending multimedia messages to a mobile network, or going to a Web site having a resident application with these conditions. This application must be able to correctly authenticate the subscriber.
   3'. Composing the message to be sent, including the multimedia content that is stored in the hard drive of the PC. Sending the message.

However, there is no way of sending content from other Web sites that are not the operator's site. That is, there is no simple, intuitive and direct manner of sending to a mobile terminal subscriber multimedia content that the Internet subscriber (through a PC or other means) finds as he or she browses on the Web.

The present invention aims at preventing the intermediate step which forces the Internet subscriber to store multimedia content which he or she really has no reason to want to store there, but which is actually essential for being able to send it to another subscriber.

French patent application FR-2835686-A3 discloses a system and device that allow mass transmission of SMS and MMS-type information directly from a computer to a server through a network, and then to a mobile terminal. The system provides the transmission of SMS and multimedia MMS messages to mobile telephones and/or agendas and/or personal planners, directly from a computer. A script language is used for communication between the computer and the Messenger Server.

It is known that abbreviations and acronyms are frequently used in the field of mobile telephony. A glossary of acronyms/terms used throughout the present specification is provided below:
- IE: Microsoft® Internet Explorer
- MMS: Multimedia Messaging Service
- Plug-in: File/Application containing data used to alter, improve or extend the operation of a parent application.
- SIM: Subscriber Identity Module
- SM: Messaging Service
- SMS: Short Messaging Service
- XML: Extensible Markup Language

### Description of the Invention

The invention relates to a method for sending multimedia content from a Web site to a mobile telephony subscriber, according to claim 1. Preferred embodiments of the method are defined in the dependent claims.

According to one aspect of the present invention, a method is herein provided which allows a source subscriber to send multimedia content to a mobile telephony subscriber from a computer (using internet for example).

The method for a source subscriber to send multimedia content from a computer to a mobile telephony recipient subscriber comprises the following steps:
- running a plug-in application embedded in an application that can be run on said computer,
- providing said source subscriber with authentication information related to his or her identity as a subscriber of a mobile network,
- providing information relating to an identity of the recipient subscriber,
- composing a multimedia message containing at least said multimedia content, and
- sending said multimedia message to a Messaging Service through a communications network to which said source subscriber is connected through the computer and by means of said embedded plug-in application.

According to a preferred embodiment of the method of the invention, said identity of the source subscriber is sent to said recipient subscriber. That is, according to this preferred embodiment, the recipient subscriber receives in his or her mobile terminal the MMS message with the information relating to the source subscriber, such that if so desired, he or she may respond to him or her.

The method of the invention preferably includes capturing at least one multimedia content of said application in which the plug-in application is embedded. Said at least one multimedia content can be viewed by the source subscriber before composing the multimedia message.

The method can further include previewing said multimedia message already composed before sending it to the Messenger Service.

The information related to the recipient subscriber can be stored in a contacts list.

### Subscriber Authentication

Source subscriber authentication in the mobile network by means of his or her MSISDN identity is required. And therefore, his or her mobile telephone number may appear before the recipient or receiving subscriber as the sender in the multimedia message he or she receives. This multimedia message can furthermore be billed as if it had been sent from his or her mobile terminal/SIM module.

There are several ways of requesting subscriber authentication. Protecting these methods is not an object of this invention, but several could be named:
■ Authentication via Bluetooth with the subscriber's mobile terminal.
■ Authentication with "user name" and "password", which would have been associated to the mobile account in the initial registration process.
■ Authentication using an external accessory that allows connecting the PC directly to the subscriber's SIM module.

### Communication between the Plug-In and the Messenger Service

There are several possibilities for communication between the Plug-In and the Messenger Service. The simplest one would be to provide an http-based proprietary protocol by means of the POST method. POST requests are a type of http protocol requests by means of which data can be sent from a form on a web page to a remote server. The main problem of doing it this way is that it is very difficult to add security and confidentiality to the data, for which purpose other more advanced protocols must be used.

In order to be able to add Security capabilities, the most appropriate would be to use Web Services mechanisms based on XML messages with SOAP format, which allow encrypting the information so that it can neither be intercepted nor manipulated. SOAP is a protocol that structures XML packages such that the information contained in any data object can be gathered.

The source subscriber is thus provided with a comfortable manner of transmitting through the mobile world the multimedia contents found while browsing on the World Wide Web.

Said source subscriber does not have to remember any Web address for sending a message, as this information is transparently stored and managed by the plug-in. Furthermore, the subscriber does not have to interrupt his or her browsing session or open any new browser window. Nor is he or she obliged to find the multimedia content in the hard drive or in other storage means, but rather he or she can specify it directly over the context (for example, a Web page) where it is found.

### Brief Description of the Drawings

A drawing which aids in better understanding the invention and which is expressly related with an embodiment of said invention, presented as a non-limiting example thereof, is very briefly described below.

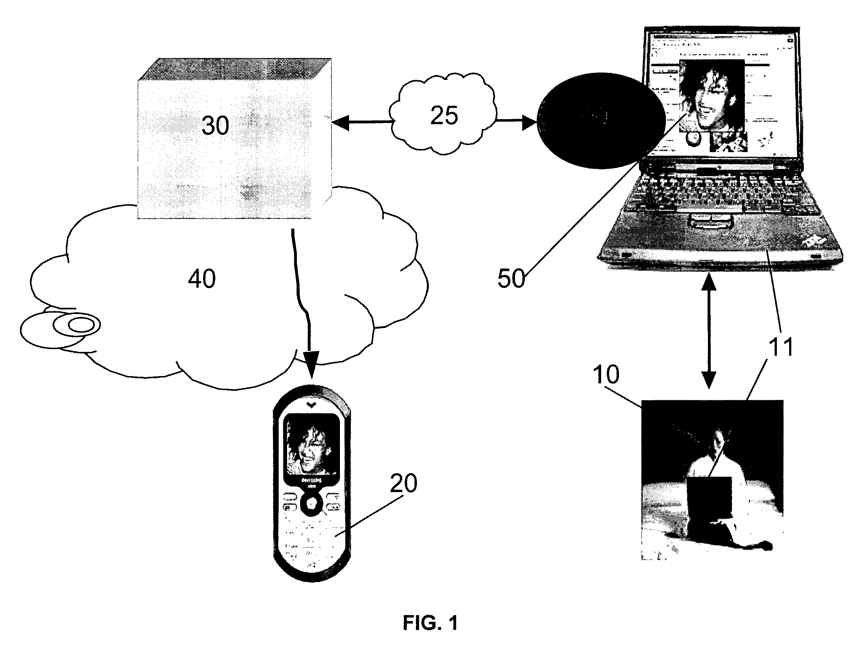

Figure 1 shows the main elements that come into contact in the method of the invention for sending multimedia-type messages to the mobile terminal as well as the connections between said elements.

### Description of a Preferred Embodiment of the Invention

Figure 1 shows the main elements that come into contact in the method of the invention for sending multimedia-type messages to the recipient mobile terminal, as well as the connections between said elements.

These elements are:
- An embedded application (or Plug-in 100) for example in the Internet Browser of the source subscriber 10.
- A messenger service 30 (Messenger Service or MS) with access to both the mobile network 40 and to Internet or another communications network 25.
- A mobile network 40 capable of carrying multimedia messages multimedia (MMS) to the mobile terminal 20 of the recipient subscriber.
- A mobile telephone 20 with multimedia capabilities that will receive the message.

To facilitate understanding Figure 1, an image of the source subscriber, who interacts with the Plug-in application embedded in his or her computer 11, is shown.

The situation, for example, is as follows:
S1: the source subscriber 10 is browsing on Internet 25 with his or her computer 11 and finds an interesting photograph 50 he or she wants to send to the mobile terminal 20 of the recipient subscriber.
S2: the source subscriber 10 launches the MMS plug-in.
   With this MMS plug-in application 100, the Internet subscriber can select the multimedia content he or she wishes to send to a mobile telephony subscriber and directly compose the message without needing to open an application or go to another Web site.
S3: the source subscriber provides authentication information relating to his or her authentication as a subscriber of a mobile network, such as, for example, MSISDN/Corp key, SIM card data, ...
S4: the source subscriber provides information relating to the recipient subscriber, for example MSISDN'. This information can be stored previously in a contacts list and would be chosen from said list.
S5: The source subscriber composes the multimedia message, for example with the photograph he or she saw on the Internet and other desired contents (MP3, text, ...)
S6: the source subscriber strikes the "Send" key.
S7: the plug-in application contacts the operator's Messaging Service 30.
S8: the recipient subscriber receives the MMS message with the information relating to the source subscriber, therefore being able to respond to him or her.
   Step S2 can be done in several manners:
   - By clicking with the right hand button on the multimedia content and selecting the option "Send by MMS". Then the Plug-In window is opened with the preselected content.
   - By launching the Plug-In window from a toolbar and selecting therein the multimedia content from among the contents shown on the Web page.
   - With any other method of selecting multimedia content shown on a Web page.

When the multimedia message has been composed, the Plug-In sends it to the Messenger Server by means of Internet protocols. Once accepted, the Message Server can directly forward it to the specified mobile subscriber. Upon receiving it, the recipient subscriber can see the sender's telephone number in the Source field, just as if it had been sent from the mobile terminal.

That is, this plug-in application basically does three things. First it manages secure communication with a remote server, using web services. For the most part, the invention is based on this communication and the feature that the operation has been divided between the plug-in and the remote server.

It also allows composing an MMS message, offering the source subscriber a preview.

Finally, the plug-in offers the possibility of collecting multimedia content from web pages, or for example images contained in an MS Word® document or an MS PowerPoint® slide. To that end, a list of miniature views of all the images on the web page (or other application being used by the source subscriber) that are able to be sent is offered. The source subscriber moves the image to the MMS composer by clicking on one of these images, and the composer dynamically reacts to the elements added by the subscriber.

## Claims

1. A method for a source subscriber (10) to send multimedia content (50) from a computer (11) to a mobile telephony recipient subscriber (20), comprising the following steps:
- running a plug-in application (100) embedded in an application that can be run on said computer (11),
- providing said source subscriber with authentication information related to his or her identity (MSISDN 10) as a subscriber of a mobile network (40),
- providing information relating to an identity (MSISDN 20) of the recipient subscriber (20),
- composing a multimedia message containing at least said multimedia content (50), and
- sending said multimedia message to a Messaging Service (30) through a communications network (25) to which said source subscriber is connected through the computer and by means of said embedded plug-in application.

2. A method according to claim 1, **characterized in that** it includes capturing at least one multimedia content of said application in which the plug-in application is embedded.

3. A method according to claim 2, **characterized in that** it further includes viewing said at least one multimedia content before composing the multimedia message.

4. A method according to any of the previous claims, **characterized in that** it further includes previewing said multimedia message before sending it to the Messaging Service.

5. A method according to any of the previous claims, **characterized in that** said information relating to the recipient subscriber is stored in a contacts list.

6. A method according to any of the previous claims, **characterized in that** said identity (MSISDN 10) of the source subscriber (10) is sent to said recipient subscriber (20).

7. A subscriber interface for a source subscriber (10) to send multimedia content (50) from a Web site to a mobile telephony subscriber (20) comprising:
- means of handling communication with a remote server for authenticating said source subscriber as a subscriber of a mobile network (40),
- means of composing a multimedia message including said multimedia content (50),
- means of sending said multimedia message to a Messaging Service (30).
